# EUROPÄISCHE PATENTSCHRIFT

(11) **EP 1 042 730 B1**
(45) Veröffentlichungstag und Bekanntmachung des Hinweises auf die Patenterteilung: **19.03.2003**
(21) Anmeldenummer: 98966227.5
(22) Anmeldetag: 22.12.1998
(51) Int. Cl.: G06K 19/06

(54) **VORRICHTUNG ZUM SENDEN VON INFORMATIONEN DURCH AKUSTISCHE SIGNALE**
DEVICE FOR TRANSMITTING INFORMATION BY MEANS OF ACOUSTIC SIGNALS
DISPOSITIF POUR L'ENVOI D'INFORMATIONS PAR SIGNAUX ACOUSTIQUES

(30) Priorität: 23.12.1997 DE 29722679 U; 22.05.1998 DE 19822875
(43) Veröffentlichungstag der Anmeldung: 11.10.2000
(73) Patentinhaber: Kuschel, Dietmar, 63069 Offenbach (DE)
(72) Erfinder: KUSCHEL, Dietmar, D-63069 Offenbach (DE); KUDNIG, Knud, D-54205 Trier (DE)
(74) Vertreter: Gornott, Dietmar, Dipl.-Ing.
(86) Internationale Anmeldenummer: DE9803773
(87) Internationale Veröffentlichungsnummer: WO99034324

(56) Entgegenhaltungen:
- DE-C- 4 435 170
- DE-U- 29 807 972
- US-A- 4 304 992
- PATENT ABSTRACTS OF JAPAN vol. 096, no. 007, 31. Juli 1996 & JP 08 077287 A (CITIZEN WATCH CO LTD), 22. März 1996

## Beschreibung

Die Erfindung betrifft eine Vorrichtung zum Erzeugen akustischer Signale, wobei auf der Oberfläche einer Plastikkarte ein mechanisches Profil angeordnet ist, welches die zu sendenden Informationen in codierter Form enthält und welches zur Bildung von Geräuschen, welche die Informationen enthalten, über eine Kante führbar ist.

Kreditkarten und Kundenkarten haben eine große Akzeptanz gefunden, wobei in zunehmendem Maße Firmen Kartensysteme zur Kundenbindung nutzen. Dazu sind häufig Telefonservice-Zentren eingerichtet, bei denen Kundenanfragen und -aufträge telefonisch abgewickelt werden können. Zur Identifizierung des Kunden ist es dabei erforderlich, daß der Kunde zu Beginn des Gesprächs seine Kundennummer und eine Geheimnummer (PIN-Code) mitteilt, worauf häufig seine Anfrage per Datenverarbeitung bearbeitet wird. Die Kundennummern sind meistens bis zu 16 Stellen lang, während PIN-Codes mit vier Stellen verbreitet sind. Bei der Durchgabe dieser Daten kommt es häufig zu Übermittlungsfehlern durch falsches Lesen des Kunden oder Hörfehler bei dem Telefonservice-Zentrum.

Erschwerend kommt hinzu, daß verschiedene Kunden die Kundennummer und den PIN-Code in unterschiedlichen Zahlenblöcken nennen. Selbst wenn keine Übermittlungsfehler auftreten, ist der Vorgang relativ zeitraubend, wodurch je nach Regelung der Belastung mit Telefongebühren bei dem Anrufer oder bei dem Telefonservice-Zentrum Kosten anfallen.

Da diese Kundenservice-Zentren für einen großen geographischen Bereich tätig sind, handelt es sich meist um Ferngespräche.

Bemühungen, diese Vorgänge mit Sprachdialogsystemen zu automatisieren, führen nicht zu einer Verringerung der Fehlerrate, so daß häufig mit wiederholten Abfragen bis zu einer Eingabe der korrekten Kundennummer und des korrekten PIN-Codes zu rechnen ist. Fehler auf der Seite der Telefonservice-Zentren können zwar bei Telefonnetzen mit dem Mehrfrequenz-Wählverfahren durch Eingabe der Nummern über die Telefon-Tastatur vermieden werden. Es verbleibt jedoch auf der Kundenseite die manuelle Eingabe mit ihren Fehlermöglichkeiten und ihrem Zeitbedarf.

Zur Lösung dieser Probleme wurde in DE 44 35 170 eine Vorrichtung nach dem Oberbegriff des Anspruchs 1 angegeben. Mittlerweile hat es sich als nachteilig herausgestellt, daß die Qualität der Informationsübermittlung bei einer derartigen Vorrichtung unter anderem davon abhängt, ob die Plastikkarte vollständig und gleichförmig über die Kante geführt wird. Ferner ist der Anpreßdruck an die Kante nicht konstant, was ebenfalls zu Fehlern führen kann.

Aufgabe der vorliegenden Erfindung ist es, eine Vorrichtung anzugeben, mit welcher die Signalerzeugung mit einer Vorrichtung nach dem Oberbegriff des Anspruchs 1 derart erfolgt, daß ein auswertbares Signal entsteht. Ferner soll eine Vorrichtung angegeben werden, die es ermöglicht, die Plastikkarte mit konstantem Anpreßdruck an der Kante vorbeizuführen.

Diese Aufgabe wird dadurch gelöst, daß das mechanische Profil mindestens zwei nebeneinanderliegende Spuren aufweist, daß eine erste Spur (Synchronisationsspur) ein regelmäßiges, sich wiederholendes Muster aufweist und daß mindestens eine weitere Spur die Informationen enthält. Eine Spur im Sinne der Erfindung muß nicht notwendigerweise physisch von einer anderen Spur getrennt sein. So ist es beispielsweise möglich, ein mechanisches Profil auf der Karte auszubilden, das von verschiedenen, nebeneinander oder hintereinander angeordneten, gegebenenfalls eine unterschiedliche Eigenfrequenz aufweisenden Abtastnocken abgetastet wird und welches sowohl eine Datenspur, als auch eine Synchronisationsspur aufweist.

Die regelmäßigen Muster der Synchronisationsspur erzeugen in dem entstehenden Geräusch regelmäßige Strukturen, die bei der Auswertung durch eine Tonanalyse erkannt werden können. Anhand dieser Strukturen lassen sich die übrigen Signale des Geräusches eindeutig einer Position auf dem mechanischen Profil der Plastikkarte und damit einer bestimmten Stelle der codierten Information zuordnen. Der Benutzer der Vorrichtung ist also nicht mehr genötigt, die Plastikkarte mit einer bestimmten konstanten Geschwindigkeit oder einem bestimmten Anpreßdruck an der Kante vorbeizuführen.

Es wird in einer ersten Ausgestaltung der Erfindung als vorteilhaft angesehen, daß das Profil aus erhabenen Noppen gebildet wird. Diese Form ist leicht durch Hohlprägung herstellbar.

Um möglichst viel Information auf der Länge einer handelsüblichen Telefonkarte speichern zu können und um eindeutig zuzuordnende Signale zu erhalten, ist bei einer Weiterbildung der Erfindung vorgesehen, daß die Noppen jeder Spur gegenüber den Punkten der jeweils benachbarten Spuren in Abtastrichtung versetzt angeordnet sind. Damit lassen sich mehr Noppen je Längeneinheit für die Informationsspeicherung und die Synchronisation auf der Karte aufprägen, weil die Sockel der Noppen sich nicht gegenseitig überschneiden. Nur die Spitzen der Noppen sind für die Geräuscherzeugung zuständig. Nach Überwindung einer Erhebung oder Erreichen einer Vertiefung des mechanischen Profils schlägt der Abtastnocken gegen die Kartenoberfläche und erzeugt einen akustischen Impuls.

Damit lassen sich Plastikkarten so prägen, daß die im mechanischen Profil codierten Informationen 56 Bit umfassen, wie es zur Übermittlung gebräuchlicher Identifikationsdatensätze nötig ist.

Bei anderen Ausgestaltungen der Erfindung ist vorgesehen, daß das Profil durch in die Kartenoberfläche eingeprägte Vertiefungen, wie querstehende Rillen, oder durch in die Plastikkarte eingebrachte Löcher gebildet ist.

Das Profil kann auch von einem Plastikstreifen oder von einer Folie gebildet sein. Derartige vorgefertigte Elemente können auf die Karte aufgeklebt oder aufgeschweißt sein. Damit können vorhandene Karten auch nachträglich mit einem erfindungsgemäßen mechanischen Profil ausgestattet werden.

Um einen konstanten Anpreßdruck und damit eine definierte Impulsstärke des resultierenden Geräusches zu gewährleisten, ist bei einer Weiterbildung der Erfindung ein Führungsteil vorgesehen, in welches die Plastikkarte einführbar ist und welches mindestens einen Abtastnocken aufweist, der beim Vorbeiziehen der Plastikkarte unter Erzeugung der Geräusche über das Profil ratscht. Dabei ist es vorteilhaft, daß der mindestens eine Abtastnocken an einer elastischen Zunge befestigt ist, die den Abtastnocken gegen das Profil andrückt.

Bei dieser Weiterbildung der Erfindung ist vorzugsweise vorgesehen, daß das Führungsteil ein Schuber für die Plastikkarte ist, welcher in der Nähe seiner Einschuböffnung den mindestens einen Abtastnocken aufweist, wodurch beim Herausziehen der Plastikkarte aus dem Schuber die Geräusche erzeugt werden. Zur Übermittlung der Signale kann der Schuber während des Herausziehens der Plastikkarte an die Sprechmuschel eines Telefonhörers gedrückt werden. Auf diese Weise wird das Signal über das Gehäuse des Telefonhörers durch Körperschall an das Mikrofon der Sprechmuschel weitergeleitet. Äußere Störgeräusche haben auf diese Weise keinen großen Einfluß auf die Signalübertragung.

Der Schuber kann zweiteilig gefertigt werden, wobei die obere und untere Hälfte einzeln hergestellt und an hervorstehenden Stegen verbunden werden, so daß ein flacher, die Karte fassender Hohlkörper entsteht. Der Schuber kann jedoch auch einteilig gespritzt werden.

Die Abtastnocken können derart gestaltet sein, daß sie beim Vorbeiziehen des Profils über die Erhebungen oder Vertiefungen des Profils gleiten. Durch die Vorspannung gegenüber der Plastikkarte schlagen die Abtastnocken nach der Überwindung einer Erhebung oder bei Erreichen einer Vertiefung gegen die Kartenoberfläche und erzeugen einen akustischen Impuls. Das dadurch entstehende Geräusch enthält die Informationen, die in dem mechanischen Profil codiert sind.

Damit die Funktion der Vorrichtung auch gewährleistet ist, wenn der Benutzer die Plastikkarte in dem Schuber verdreht, ist bei einer Weiterbildung der Erfindung vorgesehen, daß der Schuber an der dem mindestens einen Abtastnocken diagonal gegenüberliegenden Stelle der Einschuböffnung einen weiteren Satz Abtastnocken aufweist.

Alternativ kann vorgesehen sein, daß das Führungsteil eine U-förmige Schiene ist, die beispielsweise an dem Telefonhörer oder an einem als Handapparat ausgebildeten Telefon angebracht ist. Für den Fall, daß der Schuber während des Gesprächs noch an die Sprechmuschel des Telefonhörers gehalten wird, ist es vorteilhaft, wenn der Schuber Schallöffnungen zum Hindurchsprechen aufweist. Der Schuber, sowie die Abtastnocken können jeweils aus Metall und/oder Kunststoff bestehen.

Eine zweckmäßige Ausgestaltung eines zur Benutzung einer erfindungsgemäßen Plastikkarte geeigneten Schubers ist dadurch gekennzeichnet, daß das Führungsteil ein Schuber für die Plastikkarte ist, wobei der Schuber eine kulissenartige Aussparung aufweist, in welcher ein verschieblicher Schlitten, der den wenigstens einen Abtastnocken trägt, zur Erzeugung des Geräusches über das mechanische Profil der Plastikkarte schiebbar ist. Damit läßt sich das Geräusch erzeugen, ohne daß die Karte dem Schuber entnommen werden muß.

Eine vorteilhafte Weiterbildung besteht darin, daß der mindestens eine Abtastnocken an einer elastischen Zunge befestigt ist, die den Abtastnocken gegen das Profil andrückt.

Zur leichteren Analyse des entstehenden Signals kann dabei vorgesehen sein, daß mehrere elastische Zungen unterschiedlich lang ausgebildet sind, so daß sie unterschiedliche Eigenfrequenzen aufweisen.

Obwohl auch mehrere Spuren mit einem Nocken abgetastet werden können, ist vorzugsweise vorgesehen, daß das Führungsteil zur Abtastung mehrerer Spuren des mechanischen Profils mit mehreren nebeneinanderliegenden Abtastnocken versehen ist.

Um dicht besetzte Noppenreihen besser abtasten zu können, ist bei einer Weiterbildung der Erfindung vorgesehen, daß der wenigstens eine Abtastnocken zur Abtastung erhabener Noppen eine in der Mitte nach oben gewölbte Abtastkante aufweist, welche aufgrund der Wölbung nur die Spitzen der Noppen abtastet, und welcher mit den seitlich weiter nach unten gezogenen Teilen nach Überwindung der Spitzen der Noppen unter Erzeugung eines akustischen Impulses auf die Kartenoberfläche auf schlägt.

Für die Qualität des erzeugten Geräusches ist es förderlich, daß das Profil mindestens zwei Spuren aufweist und daß je Spur ein Abtastnocken vorhanden ist, der in dem Führungsteil derart angeordnet ist, daß er beim Vorbeiziehen der Plastikkarte die ihm zugeordnete Spur abtastet und ein Geräusch erzeugt. Dadurch wird das Geräusch klarer und besser analysierbar, da jeder Nocken nur für eine Spur zuständig ist und sich die Nocken nicht gegenseitig beeinflussen.

Alternativ zu dem oben genannten Versatz der Profilpunkte ist bei einer nächsten Weiterbildung der Erfindung vorgesehen, daß die Abtastnocken gegeneinander in Abtastrichtung versetzt angeordnet sind, um dadurch eine vorteilhafte zeitliche Verschiebung der erzeugten Geräuschimpulse zu bewirken. Der Versatz der Punkte jeder Spur gegeneinander, wie er weiter oben beschrieben wurde, und der Versatz der Abtastnocken lassen sich je nach Anwendungsfall zwecks Justierung des zu erzeugenden Geräusches auch kombinieren.

Um die zu einem bestimmten erfindungsgemäßen Profil passenden Abtastnocken leicht an jedem beliebigen Führungsteil anbringen zu können, kann der mindestens eine Abtastnocken an einem separaten Bauteil angebracht sein, welches in eine dafür vorgesehene Öffnung an dem Führungsteil einsetzbar ist. Dadurch läßt sich die Fertigung der Führungsteile vereinfachen, da die Abtastnocken nicht mit angeformt werden müssen. Ferner lassen sich zur Abtastung verschiedener Karten unterschiedliche Abtastnocken einsetzen.

Der Schuber kann an wenigstens einer Seite eine rutschfeste Oberfläche aufweisen und damit besser auf der Sprechmuschel eines Telefonhörers plaziert werden, ohne daß er beim Herausziehen der Plastikkarte verrutscht.

Um eine spurtreue und verkantungsfreie Führung der Plastikkarte in dem Führungsteil zu gewährleisten, kann das Führungsteil innen Führungsleisten aufweisen, welche das mechanische Profil zur Führung der Plastikkarte wenigstens teilweise umgreifen. Die Führungsleisten halten ferner einen gewissen Abstand zwischen dem mechanischen Profil und der Innenseite des Führungsteils. Dies vermeidet ein Verhaken der Karte in dem Führungsteil.

Als Merkhilfe, beispielsweise für die PIN-Nummer, können an dem Schuber austauschbare ziffernplättchen mit aufgedruckten Ziffern einclipsbar sein oder der Schuber einstellbare Schieber mit Ziffernskalen aufweisen. Der Benutzer stellt die Ziffern seiner PIN-Nummer am Schuber ein und kann diese bei Bedarf ablesen.

Ausführungsbeispiele der Erfindung sind in der Zeichnung anhand mehrerer Figuren dargestellt. Es zeigt:
- Fig. 1: eine Plastikkarte in einem Schuber während des Herausziehens,
- Fig. 2: die Abtastvorrichtung desselben Schubers im Querschnitt,
- Fig. 3: eine erfindungsgemäße Führungsschiene mit Abtastvorrichtung,
- Fig. 4: eine Plastikkarte im Schuber mit Ziffernclips und austauschbaren Abtastnocken und
- Fig. 5: einen gewölbten Abtastnocken in zwei Ansichten mit vorbeigleitendem mechanischen Profil in Seitenansicht und Draufsicht.

Gleiche Teile sind in den Figuren mit gleichen Bezugszeichen versehen.

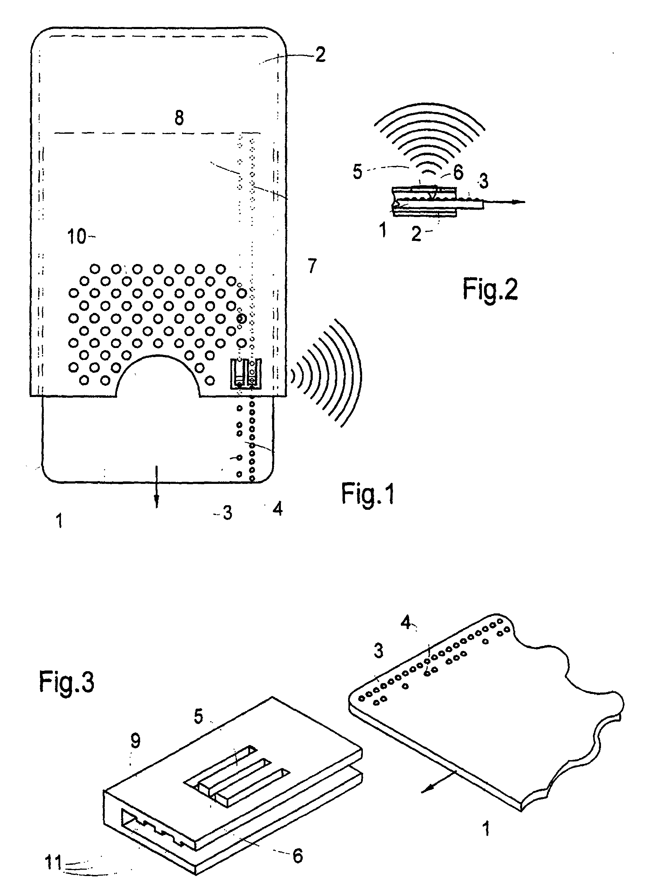

In Fig. 1 ist eine Plastikkarte 1, beispielsweise eine Telefonkarte oder eine Kreditkarte, dargestellt, wie sie gerade aus einem Kartenschuber 2 herausgezogen wird. Die erhabenen Punkte 3 des Profils 4 ratschen dabei an zwei an elastischen Zungen 5 angeformten Abtastnocken 6 vorbei und erzeugen so ein Geräusch, welches die Informationen enthält, die in dem Profil 4 codiert enthalten sind. Der Schuber 2 wird während des ganzen Vorgangs an einen Telefonhörer gehalten, so daß das Geräusch über die Telefonleitung an den Empfänger übertragen und dort analysiert werden kann. Für den Fall, daß der Schuber auch nach dem Herausziehen der Karte 1 auf die Sprechmuschel des Telefonhörers gehalten wird, sind in dem Schuber dieses Ausführungsbeispiels Schallöcher 10 vorgesehen, durch welche ein Sprechen ermöglicht wird.

Fig. 2 zeigt die Abtastvorrichtung mit den Abtastnocken 6 im Querschnitt. Jeder vorbeiratschende Punkt 3 des Kartenprofils 4 hebt den Abtastnocken 6 ein Stück an und läßt ihn nach dem Vorbeiratschen wieder zurückschnellen, wobei er gegen die Kartenoberfläche oder gegen die Frontseite des nächsten Punktes 3 stößt und dabei einen Geräuschimpuls erzeugt. Auf diese Weise entsteht ein von der Ziehgeschwindigkeit abhängiges Geräusch, das eine Folge solcher Impulse enthält.

Aus der zeitlichen Anordnung dieser Impulse in dem Geräusch läßt sich die auf dem Profil 4 der Karte eingeprägte Information rekonstruieren. Durch die Synchronisationsspur 7 entsteht eine gleichmäßige Impulsfolge, die dem Geräusch der Informationsspur 8 überlagert wird. Mit Hilfe dieser Impulsfolge können die Impulse der Informationsspur 8 eindeutig einem Ort in dem Kartenprofil 4 zugeordnet werden, auch wenn die Ziehgeschwindigkeit nicht konstant ist.

Damit kann diese Vorrichtung auch von ungeübten Benutzern leicht bedient werden. Es ist sogar denkbar, daß eine dritte Spur vorhanden ist, welche die Punkte 3 der Informationsspur 8 invertiert enthält.

In Fig. 3 ist schließlich noch eine andere Abtastvorrichtung dargestellt. Die Abtastnocken 6 sind dabei an einer Fürungsschiene 9 angeformt, welche beispielsweise an einem beliebigen Telefon, an einem tragbaren Telefon oder in Telefonzellen angebracht werden kann. Die Funktionsweise ist die gleiche wie bei dem Schuber 2.

Zur spurgenauen Führung der Karte 1 sind an der Innenseite des Führungsteils 9 Führungsleisten 11 angeordnet, welche die Noppenspuren 4 teilweise umgreifen. Auf diese Weise ist gewährleistet, daß die Noppenspuren 4 vollständig abgetastet werden. Zu dem gleichen Zweck kann auch ein erfindungsgemäßer Kartenschuber mit derartigen Führungsmittein ausgestattet werden.

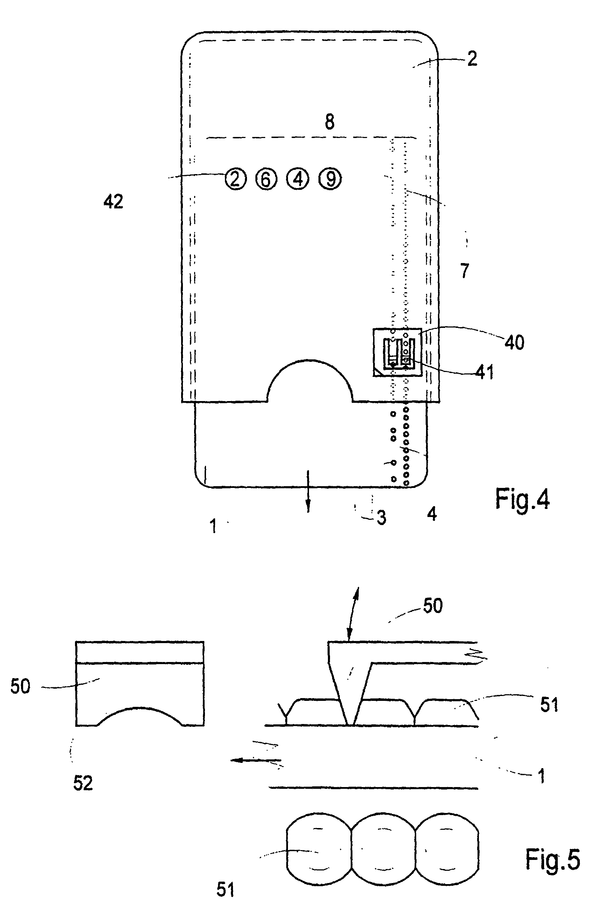

Fig. 4 zeigt einen mit einem austauschbaren Clip 40 versehenen Schuber 2. Der Clip 40 trägt die Abtastnocken 41. Ferner können austauschbare Ziffernträger 42 an dem Schuber 2 angebracht werden, um sich eine PIN-Nummer zu merken.

Zur Abtastung dicht beieinander sitzender Noppen 51 ist vorgesehen, daß die Abtastnocken 50, wie in Fig. 5 dargestellt, in der Mitte nach oben gewölbt sind. Dadurch können die seitlichen Teile 52 der Abtastnocken besser auf die Karte 1 aufschlagen.

## Patentansprüche

1. Vorrichtung zum Erzeugen akustischer Signale, wobei auf der Oberfläche einer Plastikkarte ein mechanisches Profil angeordnet ist, welches Informationen in codierter Form enthält und welches zur Bildung von Geräuschen, welche die Informationen enthalten, über eine Kante führbar ist, **dadurch gekennzeichnet, daß** das mechanische Profil (4) mindestens zwei nebeneinanderliegende Spuren (7, 8) aufweist, daß eine erste Spur (7) ein regelmäßiges, sich wiederholendes Muster aufweist und daß mindestens eine weitere Spur (8) die Informationen enthält.

2. Vorrichtung nach Anspruch 1, **dadurch gekennzeichnet, daß** das Profil (4) aus erhabenen Noppen (3) gebildet wird.

3. Vorrichtung nach Anspruch 2, **dadurch gekennzeichnet, daß** die Noppen (3) jeder Spur (7, 8) gegenüber den Noppen (3) der jeweils benachbarten Spuren (7, 8) in Abtastrichtung versetzt angeordnet sind.

4. Vorrichtung nach Anspruch 1, **dadurch gekennzeichnet, daß** das Profil durch in die Kartenoberfläche eingeprägte Vertiefungen gebildet ist.

5. Vorrichtung nach Anspruch 1, **dadurch gekennzeichnet, daß** das Profil durch in die Karte eingebrachte Löcher gebildet ist.

6. Vorrichtung nach einem der vorhergehenden Ansprüche, **gekennzeichnet durch** ein Führungsteil (2, 9), in welches die Plastikkarte (1) einführbar ist und welches mindestens einen Abtastnocken (6) aufweist, der beim Vorbeiziehen der Plastikkarte unter Erzeugung der Geräusche über das Profil (4) ratscht.

7. Vorrichtung nach Anspruch 6, **dadurch gekennzeichnet, daß** das Führungsteil ein Schuber (2) für die Plastikkarte (1) ist, welcher in der Nähe seiner Einschuböffnung den mindestens einen Abtastnocken (6) aufweist, wodurch beim Herausziehen der Plastikkarte (1) aus dem Schuber (2) die Geräusche erzeugt werden.

8. Vorrichtung nach Anspruch 6, **dadurch gekennzeichnet, daß** der Schuber an der dem mindestens einen Abtastnocken diagonal gegenüberliegenden Stelle der Einschuböffnung einen weiteren Satz Abtastnocken aufweist.

9. Vorrichtung nach Anspruch 6, **dadurch gekennzeichnet, daß** das Führungsteil eine U-förmige Schiene (9) ist.

10. Vorrichtung nach Anspruch 9, **dadurch gekennzeichnet, daß** das Führungsteil (9) an einem Telefonhörer oder an einem als Handapparat ausgebildeten Telefon angebracht ist.

11. Vorrichtung nach Anspruch 6, **dadurch gekennzeichnet, daß** das Führungsteil ein Schuber für die Plastikkarte ist, wobei der Schuber eine kulissenartige Aussparung aufweist, in welcher ein verschieblicher Schlitten, der den wenigstens einen Abtastnocken trägt, zur Erzeugung des Geräusches über das mechanische Profil der Plastikkarte schiebbar ist.

12. Vorrichtung nach einem der Ansprüche 6 bis 11, **dadurch gekennzeichnet, daß** der mindestens eine Abtastnocken (6) an einer elastischen Zunge (5) befestigt ist, die den Abtastnocken (6) gegen das Profil (4) andrückt.

13. Vorrichtung nach Anspruch 12, **dadurch gekennzeichnet, daß** mehrere elastische Zungen (5) unterschiedlich lang ausgebildet sind, so daß sie unterschiedliche Eigenfrequenzen aufweisen.

14. Vorrichtung nach einem der Ansprüche 6 bis 12, **dadurch gekennzeichnet, daß** das Führungsteil zur Abtastung mehrerer Spuren des mechanischen Profils mit mehreren nebeneinanderliegenden Abtastnocken versehen ist.

15. Vorrichtung nach einem der Ansprüche 6 bis 14, **dadurch gekennzeichnet, daß** der wenigstens eine Abtastnocken (50) zur Abtastung erhabener Noppen (51) eine in der Mitte nach oben gewölbte Abtastkante aufweist, welche aufgrund der Wölbung nur die Spitzen der Noppen abtastet, und welcher mit den seitlich weiter nach unten gezogenen Teilen (52) nach Überwindung der Spitzen der Noppen (51) unter Erzeugung eines akustischen Impulses auf die Kartenoberfläche (1) aufschlägt.

16. Vorrichtung nach einem der Ansprüche 6 bis 15, **dadurch gekennzeichnet, daß** die Abtastnocken gegeneinander in Abtastrichtung versetzt angeordnet sind.

## Claims

1. Device for generating acoustic signal, and onto the surface of a plastic card is placed a mechanical profile containing information in a coded form and which is swiped along an edge so as to generate sounds which contain said information, **characterised in that** the mechanical profile (4) comprises at least two tracks (7, 8) positioned alongside each other, a first track (7) comprises a regular repeating pattern, and at least one further track (8) contains said information.

2. Device according to Claim 1, **characterised in that** the profile (4) is formed of proud points (3).

3. Device according to Claim 2, **characterised in that** the points (3) of each track (7, 8) are in the scanning direction transposed relative to the points (3) of respective adjacent tracks (7, 8).

4. Device according to Claim 1, **characterised in that** the profile is formed by recesses embossed into the card surface.

5. Device according to Claim 1, **characterised in that** the profile is formed by holes produced in the card.

6. Device according to one of the above claims, **characterised by** a guide element (2, 9) into which the plastic card (1) is inserted and which comprises at least one scanning cam (6) which drags over the profile (4) whilst being pulled past the plastic card and generating the sounds.

7. Device according to Claim 6, **characterised in that** the guide element is a pusher (2) for the plastic card (1) which has near its insert opening at least one scanning cam (6), and the sounds are generated whilst the plastic card (1) is pulled out of the pusher (2).

8. Device according to Claim 6, **characterised in that** the pusher has an aditional set of scanning cams at the point of the insert opening diagonally opposite the at least one scanning cam.

9. Device according to Claim 6, **characterised in that** the guide element is a U-shaped track (9).

10. Device according to Claim 9, **characterised in that** the guide element (9) is attached to a telephone receiver or a telephone designed as a hand set.

11. Device according to Claim 6, **characterised in that** the guide element is a pusher for the plastic card, and the pusher comprises a link like cutout wherein a displaceable slide which supports the at least one scanning cam is slideable for generating the sound via the mechanical profile of the plastic card.

12. Device according to one of Claims 6 to 11, **characterised in that** the at least one scanning cam (6) is attached to an elastic tongue (5) which pushes the scanning cam (6) against the profile (4).

13. Device according to Claim 12, **characterised in that** a plurality of elastic tongues (5) is of different length so that they have their own different frequencies.

14. Device according to one of Claims 6 to 12, **characterised in that** the guide element is provided with a plurality of scanning cams placed alongside each other for the purpose of scanning a plurality of tracks of the mechanical profile.

15. Device according to one of Claims 6 to 14, **characterised in that** the at least one scanning cam (50) has for the purpose of scanning proud points (51) a scanning edge which is in the middle curved upwards, which due to the curvature only scans the peaks of the points, and which makes contact with laterally further downward pulled sections (52) once the peaks of the points (51) have been overcome whilst generating an acoustic impulse on the card surface (1).

16. Device according to one of Claims 6 to 15, **characterised in that** the scanning cams are arranged transposed relative to each other in the scanning direction.

## Revendications

1. Dispositif pour générer des signaux acoustiques, moyennant quoi on dispose sur la surface d'une carte plastique un profilé mécanique qui contient des informations sous forme codée et qui peut être guidé par une arête pour former des bruits contenant les informations, **caractérisé en ce que** le profilé (4) mécanique présente au moins deux traces (7, 8) juxtaposées, **en ce qu'**une première trace (7) présente un modèle régulier et qui se répète et **en ce qu'**au moins une autre trace (8) contient les informations.

2. Dispositif selon la revendication 1, **caractérisé en ce que** le profilé (4) est formé de nopes (3) en relief.

3. Dispositif selon la revendication 2, **caractérisé en ce que** les nopes (3) de chaque trace (7, 8) sont disposées de façon décalée par rapport aux nopes (3) des traces (7, 8) respectivement voisines dans le sens de balayage.

4. Dispositif selon la revendication 1, **caractérisé en ce que** le profilé est formé par des cavités incrustées dans la surface de la carte.

5. Dispositif selon la revendication 1, **caractérisé en ce que** le profilé est formé par des trous introduits dans la carte.

6. Dispositif selon l'une quelconque des revendications précédentes, **caractérisé par** une partie de guidage (2, 9), dans laquelle la carte plastique (1) peut être introduite et qui présente au moins une came de balayage (6), qui grince lors du passage de la carte plastique en générant des bruits au-dessus du profilé (4).

7. Dispositif selon la revendication 6, **caractérisé en ce que** la partie de guidage est un emboîtage (2) pour la. carte plastique (1), lequel présente au moins une came de balayage (6) à proximité de son orifice d'insertion, ce qui fait que les bruits sont générés lors de l'extraction de la carte plastique (1) de l'emboîtage (2).

8. Dispositif selon la revendication 6, **caractérisé en ce que** l'emboîtage présente un autre jeu de cames de balayage à l'emplacement de l'orifice d'insertion qui est opposé en diagonale à au moins une came de balayage.

9. Dispositif selon la revendication 6, **caractérisé en ce que** la partie de guidage est un rail (9) en forme de U.

10. Dispositif selon la revendication 9, **caractérisé en ce que** la partie de guidage (9) est disposée sur un écouteur ou sur un téléphone conçu comme un combiné téléphonique.

11. Dispositif selon la revendication 6, **caractérisé en ce que** la partie de guidage est un emboîtage pour la carte pastique, moyennant quoi l'emboîtage présente un évidement en forme de coulisse, dans lequel un coulisseau déplaçable, qui porte au moins une came de balayage, peut glisser sur le profilé mécanique de la carte plastique pour générer le bruit.

12. Dispositif selon l'une quelconque des revendications 6 à 11, **caractérisé en ce qu'**au moins une came de balayage (6) est fixée sur une lame (5) élastique, qui appuie la came de balayage (6) contre le profilé (4).

13. Dispositif selon la revendication 12, **caractérisé en ce que** plusieurs lames (5) élastiques sont conçues avec une longueur différente, de sorte qu'elles présentent des fréquences propres différentes.

14. Dispositif selon l'une quelconque des revendications 6 à 12, **caractérisé en ce que** la partie de guidage est pourvue de plusieurs cames de balayage juxtaposées pour le balayage de plusieurs traces du profilé mécanique.

15. Dispositif selon l'une quelconque des revendications 6 à 14, **caractérisé en ce qu'**au moins une came de balayage (50) présente pour le balayage de nopes (51) en relief une arête de balayage cintrée au centre vers le haut, qui balaie seulement les extrémités des nopes en raison de la courbure et qui, avec les parties (52) tirées latéralement un peu plus vers le bas, bute sur la surface de la carte (1) après le franchissement des extrémités des nopes (51) en formant une impulsion acoustique.

16. Dispositif selon l'une quelconque des revendications 6 à 15, **caractérisé en ce que** les cames de balayage sont disposées en décalé les unes par rapport aux autres dans le sens de balayage.
